# EUROPÄISCHE PATENTSCHRIFT

(11) **EP 4 009 225 B1**
(45) Veröffentlichungstag und Bekanntmachung des Hinweises auf die Patenterteilung: **06.12.2023**
(21) Anmeldenummer: 20212207.3
(22) Anmeldetag: 07.12.2020
(51) Int. Cl.: G06K 7/10, G01S 7/481, G01S 17/89, G01V 8/12

(54) **OPTISCHER SENSOR**
OPTICAL SENSOR
CAPTEUR OPTIQUE

(43) Veröffentlichungstag der Anmeldung: 08.06.2022
(73) Patentinhaber: Leuze electronic GmbH + Co. KG, 73277 Owen/Teck (DE)
(72) Erfinder: Dümmel, Thomas, 72584 Hülben (DE); Doll, Manfred, 73230 Kirchheim unter Teck (DE)
(74) Vertreter: Ruckh, Rainer Gerhard

(56) Entgegenhaltungen:
- EP-A1- 1 845 401
- EP-A1- 2 924 477
- EP-A1- 3 581 959
- EP-A1- 3 699 640
- EP-B1- 1 845 401
- EP-B1- 2 924 477

## Beschreibung

Die Erfindung betrifft einen optischen Sensor gemäß dem Oberbegriff des Anspruchs 1.

Derartige optische Sensoren bilden Kamerasensoren, die als Empfänger einen Bildsensor in Form eines CCD- oder CMOS-Arrays aufweisen. Mit derartigen optische Sensoren kann generell ein Raumbereich erfasst werden, um dort vorhandene Objekte zu detektieren.

Diese optische Sensoren können einerseits zu Überwachungszwecken eingesetzt werden, um festzustellen, ob bestimmte, insbesondere sicherheitskritische Objekte in einen Überwachungsbereich eindringen. Bei Detektion eines solchen Objekts kann im optischen Sensor ein Objektfeststellungssignal in Form eines sicherheitsrelevanten Ausgangssignals generiert werden.

Generell können derartige optische Sensoren auch zur Objektidentifikation eingesetzt werden.

Schließlich können die optische Sensoren auch als Codeleser ausgebildet sein, mittels derer Codes wie Barcodes, 2D-Codes und dergleichen erfasst werden können. In diesem Fall werden mit dem optischen Sensor die entsprechenden Codes gelesen und detektiert und das Dekodierungsergebnis wird als Objektfeststellungssignal ausgegeben.

Um die entsprechenden Objekte im Erfassungsbereich sicher detektieren zu können, ist es erforderlich die Bildebene des optischen Sensors und die Abbildungsebene des Bildsensors parallel zueinander auszurichten. Bei bekannten optischen Sensoren wird hierzu die Empfangsoptik relativ zum Bildsensor verstellt. Nachteilig hierbei ist, dass die typischerweise von einem Objektiv gebildete Empfangsoptik ein hohes Eigengewicht aufweist.

In EP 3 699 640 A1 wird ein optoelektronischer Sensor zur Erfassung eines Objekts in einem Überwachungsbereich mit einem Lichtsender zum Aussenden von Sendelicht eines Wellenlängenbereichs, mit einem Lichtempfänger zum Erzeugen eines Empfangssignals aus dem an dem Objekt remittierten Sendelicht, mit einer dem Lichtempfänger vorgeordneten Empfangsoptik, die ein auf den Wellenlängenbereich abgestimmtes optisches Filter zur Unterdrückung von Fremdlicht aufweist, sowie mit einer Steuer- und Auswertungseinheit angegeben, die dafür ausgebildet ist, aus dem Empfangssignal eine Objektinformation zu erzeugen. Dabei ist eine Verstelleinrichtung zum Verändern des Einfallswinkels des remittierten Sendelichts auf das optische Filter vorgesehen. Durch die Verstelleinrichtung kann ein Durchlassbereich des optischen Filters an den Wellenlängenbereich des Sendelichts angepasst werden. Die Anpassung findet beispielsweise als letzter Justageschritt etwa im Rahmen der Fertigung statt. Die Verstelleinrichtung ist bevorzugt dafür ausgebildet, das optische Filter zu verkippen. Durch das Schrägstellen des Filters gegenüber den einlaufenden Lichtstrahlen verschiebt sich der Durchlassbereich. Die Empfangsoptik weist bevorzugt eine Empfangslinse auf. Der Empfangslinse ist bevorzugt eine Blende nachgeordnet. Die Verstelleinrichtung ist bevorzugt dafür ausgebildet, das optische Filter und eine kugelförmige Linse zu verkippen, insbesondere mit Drehpunkt in der kugelförmigen Linse. Eine elektronische Aktorik mit automatischer Regelung ist denkbar. Anspruch 1 ist gegen dieses Dokument abgegrenzt.

In EP 2 924 477 A1 wird eine optoelektronische Vorrichtung zur Erfassung von Objektinformationen aus einem Überwachungsbereich mit einem Lichtempfänger, einer dem Lichtempfänger zugeordneten Empfangsoptik, die eine adaptive Linse mit variabler Verkippung aufweist, und einer Auswertungseinheit zum Erzeugen der Objektinformationen aus einem Empfangssignal des Lichtempfängers angegeben. Dabei ist die Auswertungseinheit dafür ausgebildet, die adaptive Linse in mehrere unterschiedliche Kippstellungen zu bringen und dadurch zusätzliche Objektinformationen aus einem vergrößerten Überwachungsbereich zu gewinnen.

Die EP 1 845 401 A1 betrifft einen optischen Sensor zur Erfassung von Objekten in einem Überwachungsbereich. Dieser umfasst als Optikelemente einen Sendelichtstrahlen emittierenden Sender und/oder einen Empfangslichtstrahlen empfangenden Empfänger. Diese sind innerhalb eines Gehäuses angeordnet. Ein Optikelement ist durch wenigstens ein Stellelement justierbar und das justierte Optikelement ist durch eine in das Gehäuse eingespritzte Niederdruckmasse lagefixiert, wobei die Niederdruckmasse ein Dichtmittel für das Gehäuse bildet.

In EP 3 581 959 A1 wird ein optoelektronischer Sensor zur Erfassung von Objekten in einem Überwachungsbereich angegeben, der eine um eine Drehachse bewegliche Abtasteinheit mit mindestens einem Abtastmodul zur Abtastung des Überwachungsbereichs im Verlauf der Bewegung der Abtasteinheit um die Drehachse und zum Erzeugen von entsprechenden Empfangssignalen sowie eine Auswertungseinheit zur Gewinnung von Informationen über die Objekte aus den Empfangssignalen aufweist, wobei das Abtastmodul mindestens einen Lichtsender zum Aussenden eines Lichtstrahls oder mehrerer voneinander separierter Lichtstrahlen und mindestens einen Lichtempfänger zum Erzeugen der Empfangssignale aus den von Objekten remittierten Lichtstrahlen umfasst. Dabei weist das Abtastmodul eine Verstelleinheit auf, mittels derer das Abtastmodul dynamisch innerhalb der Drehbewegung um einen Kippwinkel verkippbar und/oder um einem Drehwinkel verdrehbar ist.

Der Erfindung liegt die Aufgabe zugrunde, für einen optischen Sensor der eingangs genannten Art, bei welchem die Abbildungseigenschaften dessen optischen Systems präzise eingestellt werden könne.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Detektion von Objekten innerhalb eines Erfassungsbereichs, mit einem Empfangslichtstrahlen empfangenden Bildsensor, welchem eine Empfangsoptik vorgeordnet ist. In einer Auswerteeinheit wird in Abhängigkeit von Empfangssignalen des Bildsensors ein Objektfeststellungssignal generiert. Eine Verstelleinheit ist vorgesehen, mittels derer eine Verkippungseinstellung des Bildsensor relativ zu einer Ebene der feststehenden Empfangsoptik durchführbar ist. Die Verstelleinheit weist eine Schwenklagerung auf, an welcher das Zentrum des Bildsensors gelagert ist, so dass dieser in zwei Raumrichtungen bezüglich der Ebene der Empfangsoptik kippbar ist. Die Verstelleinheit weist zwei Einstellmittel auf, mittels derer für jeweils eine Raumrichtung ein Kippwinkel des Bildsensors vorgebbar ist.

Dabei weist der optische Sensor vorteilhaft eine Sendelichtstrahlen emittierende Beleuchtungseinheit auf, wobei von der Beleuchtungseinheit emittierte Sendelichtstrahlen von einem zu detektierenden Objekt als Empfangslichtstrahlen zum Bildsensor geführt sind.

Die Beleuchtungseinheit kann beispielsweise von einer Anordnung von Laserdioden oder Leuchtdioden gebildet sein.

Der Grundgedanke der Erfindung besteht somit darin zur Anpassung der optischen Abbildungseigenschaften nicht die insbesondere von einem Objektiv gebildete Empfangsoptik zu verstellen, sondern den Bildsensor. Da der insbesondere von einem CCD- oder CMOS-Array gebildete Bildsensor ein erheblich geringeres Eigengewicht als die Empfangsoptik hat, muss die Verstelleinheit im Vergleich zu bekannten Systemen, bei welchen die Empfangsoptik verstellt wird, mit dem Bildsensor eine erheblich geringere Masse bewegen. Dadurch kann einerseits die Verstelleinheit einen kompakten Aufbau aufweisen.

Der Bildsensor weist vorteilhaft eine matrixförmige Anordnung von Empfangselementen auf, die in einer Bildsensorebene liegen.

Mit der erfindungsgemäßen Verstelleinheit erfolgt eine Ausrichtung des Bildsensors relativ zur stationären Empfangsoptik, dass dieser, vorzugsweise dessen Bildsensorebene, parallel zur Abbildungsebene der Empfangsoptik ausgerichtet ist, so dass für alle Empfangselemente dieselbe Schärfeeinstellung erzielt wird, wodurch die Detektionsempfindlichkeit und Detektionssicherheit für alle Empfangselemente gleichermaßen optimiert wird.

Besonders vorteilhaft kann die erfindungsgemäße Verstelleinheit mit einer Fokusverstellung kombiniert werden. Bei der Fokusverstellung wird die Position des Bildsensors abhängig von der aktuellen Entfernung eines zu detektierenden Objekts zum optischen Sensor die Fokuslage der Empfangslichtstrahlen so verstellt, dass in der Bildsensorebene eine scharfe Abbildung des Objekts erhalten wird. Zur Bestimmung der Entfernung kann im optischen Sensor eine Entfernungsmesseinrichtung integriert sein. Alternativ kann die aktuelle Entfernung als Parameterwert über eine externe Steuereinheit vorgegeben werden.

Gemäß einer konstruktiv vorteilhaften Ausgestaltung weist die Verstelleinheit ein Halteteil auf, an welchem der Bildsensor befestigt ist, und ein diesem zugeordnetes stationäres Aufnahmeteil. Zur Ausbildung der Schwenklagerung weist das Halteteil ein Lagerungssegment auf, dessen Zentrum mit dem Zentrum des Bildsensors zusammenfällt und das in einem komplementär zu diesem ausgebildeten Aufnahmesegment des Aufnahmeteils geführt ist, so dass der Bildsensor in zwei Raumrichtungen bezüglich der Ebene der Empfangsoptik kippbar ist. Bei einem Verkippen bleibt die Lage des Zentrums des Bildsensors erhalten.

Das Halteteil und das Aufnahmeteil bilden vorteilhaft flächige Elemente, die mittels der Schwenklagerung in Form des Aufnahmesegments und des Lagerungssegments in zwei Raumrichtungen geschwenkt werden können. Die so ausgebildete Schwenkbewegung weist einen besonders einfachen Aufbau auf.

Besonders vorteilhaft weist das Lagerungssegment eine konvexe Außenkontur auf. Das Aufnahmesegment weist eine hierzu komplemente konkave Außenkontur auf.

Insbesondere ist die Außenkontur des Lagerungssegments von einem Segment einer Kugeloberfläche gebildet.

Weiterhin weist die Außenkontur des Aufnahmesegments eine drehsymmetrische Anordnung von Schrägflächen auf.

Vorteilhaft ist eine Anordnung von ebenen Schrägflächen vorgesehen, die einen Tetraeder bilden. Dadurch wird eine eineindeutige statisch bestimmte Lagerung erhalten.

An der so ausgebildeten Schwenklagerung kann der Bildsensor in beliebig kleinen Winkel schritten und somit hochgenau in zwei Raumrichtungen bezüglich der stationären Empfangsoptik gekippt werden.

Gemäß einer vorteilhaften Ausführungsform sind Einstellungen der Kippwinkel des Bildsensors mittels eines Fixierelements fixierbar.

Dadurch wird eine eingestellte Justageposition bleibend eingestellt.

Besonders zweckmäßig ist das Fixierelement von einer das Lagerungssegment und Aufnahmesegment axial durchsetzenden Fixierschraube gebildet.

Da dieses Fixierelement koaxial zur Schwenklagerung und somit zum Zentrum des Bildsensors verläuft, ist gewährleistet, dass die Fixierung mittels des Fixierelements rückwirkungsfrei, das heißt ohne Gefahr einer Änderung einer eingestellten Justageposition des Bildsensors erfolgt.

Besonders vorteilhaft ist zwischen dem Kopf der Fixierschraube und dem Aufnahmesegment des Aufnahmeteils eine Führungsscheibe gelagert.

Durch diese Führungsscheibe, die zweckmäßig in ihrer Kontur an das Aufnahmesegment des Aufnahmeteils angepasst ist, wird eine besonders genaue Kippwinkeleinstellung ermöglicht.

Besonders vorteilhaft werden die Führungsscheibe und die Lagerstellen von Lagerungssegment und Aufnahmesegment durch ein federndes Element vorgespannt. Dadurch entsteht eine in Axialrichtung spielfreie Bewegung.

Besonders vorteilhaft ist zur Durchführung von Kippbewegungen des Bildsensors ein Betätigungselement vorgesehen.

Dabei kann das Betätigungselement mit dem Fixierelement verbunden sein oder an diesem anbringbar sein.

Damit wird ein hoher Bedienkomfort bei der Justage des Bildsensors erzielt.

Gemäß einer zweckmäßigen Weiterbildung kann eine Einstellung des Bildsensors durch Klebeverbindungen gesichert werden.

Damit wird zusätzlich zur Fixierung mittels des Fixierelements eine bleibende, unveränderte Fixierung einer Justageposition des Bildsensors ermöglicht. Vorteilhaft sind die beiden Einstellmittel in zwei unabhängigen Raumrichtungen relativ zu der Schwenklagerung orientiert.

Hierzu sind die Einstellmittel senkrecht zueinander orientiert, das heißt die Verbindungslinien zwischen Schwenklagerung und dem ersten Einstellmittel einerseits und der Schwenklagerung und dem zweiten Einstellmittel andererseits verlaufen in einem rechten Winkel zueinander.

Gemäß einer konstruktiv vorteilhaften Ausgestaltung sind die Einstellmittel von federnd gelagerten Einstellschrauben gebildet.

Dabei durchsetzt jede Einstellschraube eine Bohrung im Aufnahmeteil und ist mit ihrem freien Ende in einer Gewindebohrung des Halteteils gelagert.

Federnde Elemente, die die Federlagerungen ausbilden, sorgen dafür, dass bei Betätigen der Einstellschrauben das Aufnahmeteil und das Halteteil gegeneinander verspannt sind.

Gemäß einer vorteilhaften Weiterbildung ist eine Zwangsführung vorgesehen, mittels derer der Bildsensor gegen Drehbewegungen gesichert ist.

Damit ist gewährleistet, dass der Bildsensor nur Kippbewegungen durchführen kann.

Gemäß einer konstruktiv vorteilhaften Ausgestaltung weist die Zwangsführung am Halteteil befestigte Führungselemente mit jeweils einer Ausnehmung und in die Ausnehmung greifende bolzenförmige Führungsteile auf, die mit dem Aufnahmeteil verbunden sind.

Der erfindungsgemäße optische Sensor kann vorteilhaft als Codeleser ausgebildet sein. Alternativ kann mit dem optischen Sensor eine Überwachung eines Überwachungsbereichs durchgeführt werden. Schließlich kann der optische Sensor zur Objektidentifikation eingesetzt werden.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Schnittdarstellung einer ersten Ausführungsform einer Verstelleinheit für den optischen Sensor gemäß Figur 1.
- Figur 3:: Perspektivische Darstellung der Verstelleinheit gemäß Figur 2.
- Figur 4:: Draufsicht auf die Anordnung gemäß Figur 3.
- Figur 5:: Teilschnittdarstellung der Anordnung gemäß den Figuren 3 und 4.
- Figur 6:: Perspektivische Darstellung einer zweiten Ausführungsform der Verstelleinheit.
- Figur 7:: Darstellung einer dritten Ausführungsform der Verstelleinheit.

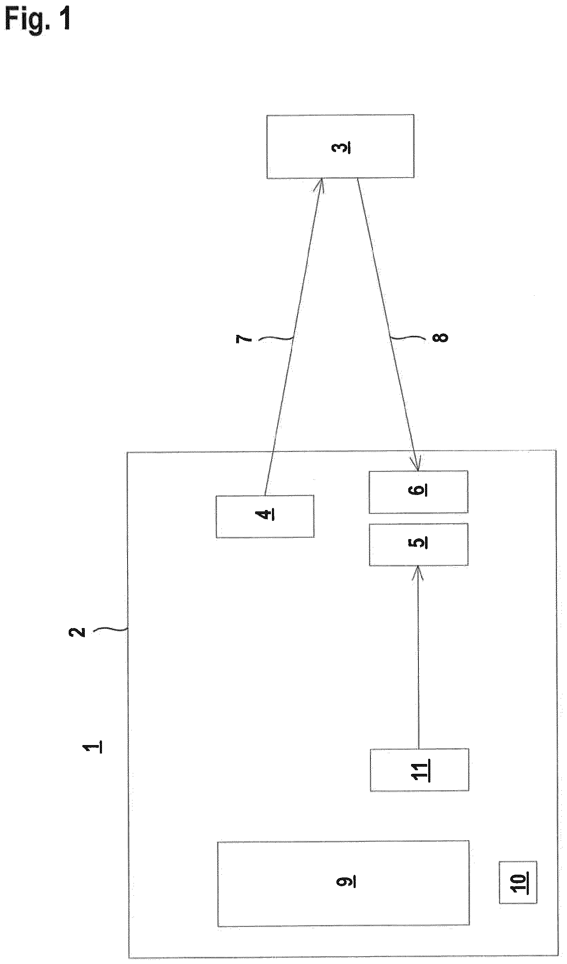

Figur 1 zeigt ein Ausführungsbeispiel des erfindungsgemäßen optischen Sensors 1. Die Komponenten des optischen Sensors 1 sind in einem Gehäuse 2 integriert. Zur Detektion von Objekten 3 in einem Erfassungsbereich weist der optische Sensor 1 eine Beleuchtungseinheit 4 auf, die vorteilhaft von einer Anordnung von Laserdioden oder Leuchtdioden gebildet sein kann.

Weiterhin weist der optische Sensor 1 als Empfänger einen Bildsensor 5 mit einer vorgeordneten Empfangsoptik 6 auf. Der Bildsensor 5 weist eine matrixförmige Anordnung von Empfangselementen auf und ist insbesondere in Form eines CCD- oder CMOS-Arrays ausgebildet. Die Empfangsoptik 6 ist von einem Objektiv gebildet.

Zur Detektion von Objekten 3 emittiert die Beleuchtungseinheit 4 Sendelichtstrahlen 7. Die an einem Objekt 3 reflektierten Sendelichtstrahlen 7 werden als Empfangslichtstrahlen 8 über die Empfangsoptik 6 zum Bildsensor 5 reflektiert.

Die Auswertung der Empfangssignale des Bildsensors 5 erfolgt in einer Steuer- und Auswerteeinheit 9, das heißt diese bildet eine Auswerteeinheit derart, dass abhängig von den Empfangssignalen ein Objektfeststellungssignal generiert wird, das über eine geeignete Schnittstelle 10 ausgegeben wird. Die Steuer- und Auswerteeinheit 9 dient weiterhin zur Steuerung der elektronischen beziehungsweise optoelektronischen Komponenten des optischen Sensors 1.

Der optische Sensor 1 kann zur Überwachung eines Überwachungsbereichs eingesetzt werden. Dann ist das Objektfeststellungssignal als binäres Schaltsignal ausgebildet, dessen Schaltzustände signalisieren, ob ein definiertes, insbesondere sicherheitskritisches Objekt 3 im Überwachungsbereich vorhanden ist oder nicht.

Weiterhin kann der optische Sensor 1 zur Objektidentifikation eingesetzt werden. Schließlich kann der optische Sensor 1 als Codeleser ausgebildet sein. Dann werden mit dem optischen Sensor 1 auf Objekten 3 aufgebrachte Codes, wie zum Beispiel Barcodes oder 2D-Codes detektiert und in der Steuer- und Auswerteeinheit 9 dekodiert.

Erfindungsgemäß weist der optische Sensor 1 eine Verstelleinheit 11 auf, mit der die Neigung des Bildsensors 5 so gegenüber dem feststehenden Objektiv ausgerichtet werden kann, dass die Bildsensorebene parallel zur Abbildungsebene des Objektivs ausgerichtet ist.

Zusätzlich kann eine nicht dargestellte Fokusverstellung vorgesehen sein, mit der abhängig von der aktuellen Entfernung des Objekts 3 zum optischen Sensor 1 der Abstand zwischen Bildsensor 5 und Objektiv eingestellt wird.

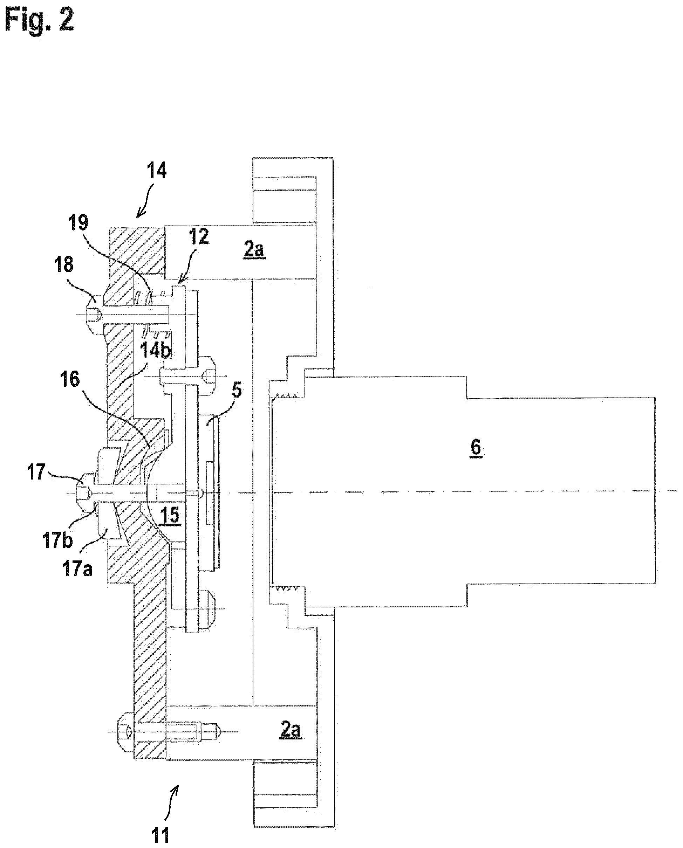

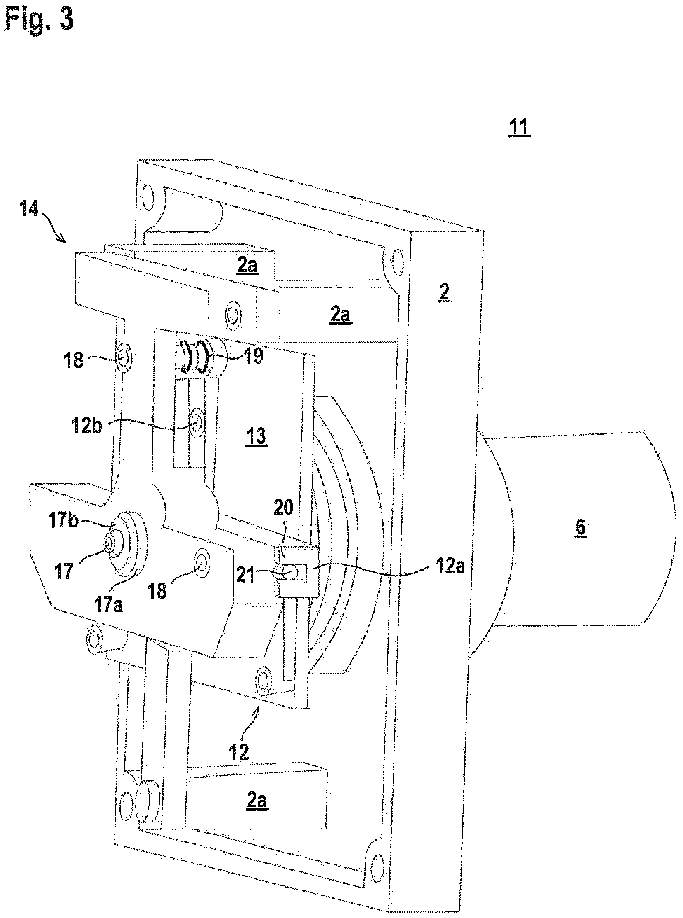

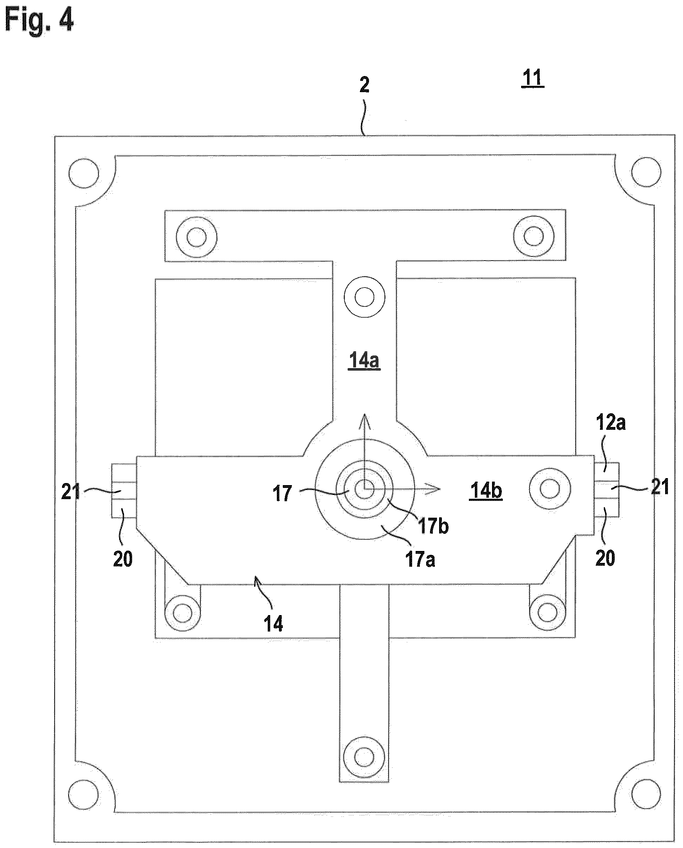

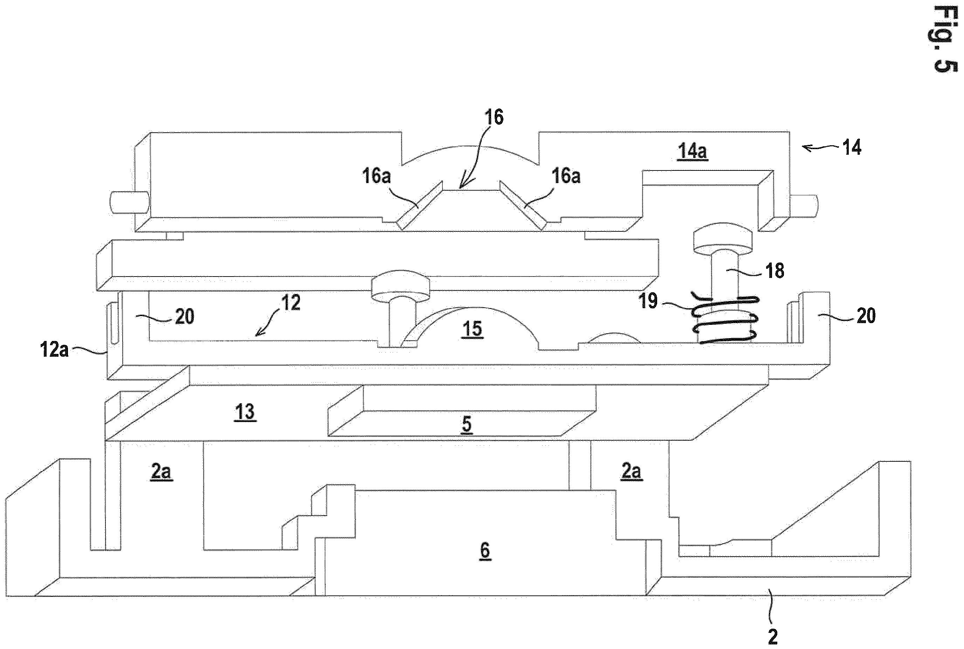

Die Figuren 2 bis 5 zeigen ein erstes Ausführungsbeispiel der erfindungsgemäßen Verstelleinheit 11.

Die Verstelleinheit 11 umfasst ein Halteteil 12 mit senkrecht zueinander verlaufenden Verstrebungen 12a, 12b, an welchen eine den Bildsensor 5 tragende Leiterplatte 13 befestigt ist.

Dieses Halteteil 12 ist in zwei Raumrichtungen kippbar an einem stationär im optischen Sensor 1 gelagerten Aufnahmeteil 14 gelagert. Das Aufnahmeteil 14 ist an Streben 2a des Gehäuses 2 befestigt.

Im Zentrum des Halteteils 12 ist ein konvers ausgebildetes Lagerungssegment 15 vorgesehen, dessen Zentrum mit dem Zentrum des Bildsensors 5 zusammenfällt. Die Außenkontur des Lagerungssegments 15 ist von einem Segment einer Kugeloberfläche gebildet.

Das Aufnahmeteil 14 weist ein dem Lagerungssegment 15 zugeordnetes, konvers ausgebildetes Aufnahmesegment 16 auf. Das Aufnahmesegment 16 weist eine drehsymmetrische Anordnung von Schrägflächen 16a auf, die auf dem kugelförmigen Lagerungssegment 15 gleiten können.

Das Lagerungssegment 15 und das Aufnahmesegment 16 werden von einer ein Fixierelement bildenden Fixierschraube 17 durchsetzt. Zwischen dem Kopf der Fixierschraube 17 und der Außenkontur des Aufnahmesegments 16 ist eine Führungsscheibe 17a gelagert, die an die Außenkontur des Aufnahmesegments 16 angepasst ist. Weiterhin ist ein federndes Element 17b vorgesehen. Dadurch erfolgt ein Vorspannen der Führungsscheibe 17a und der Lagerstellen des Lagerungssegments 15 und des Aufnahmesegments 16, wodurch eine spielfreie Bewegung in Axialrichtung erzielt wird.

Das Aufnahmesegment 16 und das Lagerungssegment 15 bilden mit dem Fixierelement eine Schwenklagerung, die ein Kippen des Halteteils 12 und damit des Bildsensors 5 in zwei Raumrichtungen ermöglichen.

Das Aufnahmeteil 14 weist mehrere Verstrebungen 14a, 14b auf, die in einer Ebene liegen. In zwei von 90° gegeneinander versetzt angeordneten Verstrebungen 14a, 14b ist in jeweils einer Bohrung eine Einstellschraube 18 als Einstellmittel zur Vorgabe eines Kippwinkels des Bildsensors 5 in einer Raumrichtung vorgesehen. An den Schäften der Einstellschrauben 18 sind Federn 19 gelagert. Die freien Enden der Einstellschrauben 18 greifen in Gewindebohrungen des Halteteils 12.

Durch Betätigen der Einstellschrauben 18 wird in jeweils einer Raumrichtung der Kippwinkel des Bildsensors 5 vorgegeben, wobei bei Betätigen einer Einstellschraube 18 das Aufnahmesegment 16 am Lagerungssegment 15 eine entsprechende Schwenkbewegung durchführt. Die Federlagerungen der Federn 19 sorgen für ein Vorspannen des Halteteils 12 und des Aufnahmeteils 14.

Dieser Einstellvorgang erfolgt, wenn die Fixierschraube 17 noch nicht fest angezogen ist. Durch festes Anziehen der Fixierschraube 17 wird die eingestellte Justageposition des Bildsensors 5 fixiert. Die Justageposition kann weiterhin durch definierte Klebepunkte zwischen gegeneinander beweglichen Teilen gesichert werden.

Eine der Verstrebungen 12a, 12b des Halteteils 12 weist Führungssegmente 20 mit einer an der Oberseite ausmündenden Ausnehmung auf. In diese Ausnehmung greift ein bolzenförmiges Führungsteil 21 des Aufnahmeteils 14. Dadurch wird eine Zwangsführung gebildet, die den Bildsensor 5 gegen Drehbewegungen um eine durch die Fixierschraube 17 verlaufende Drehachse sichert.

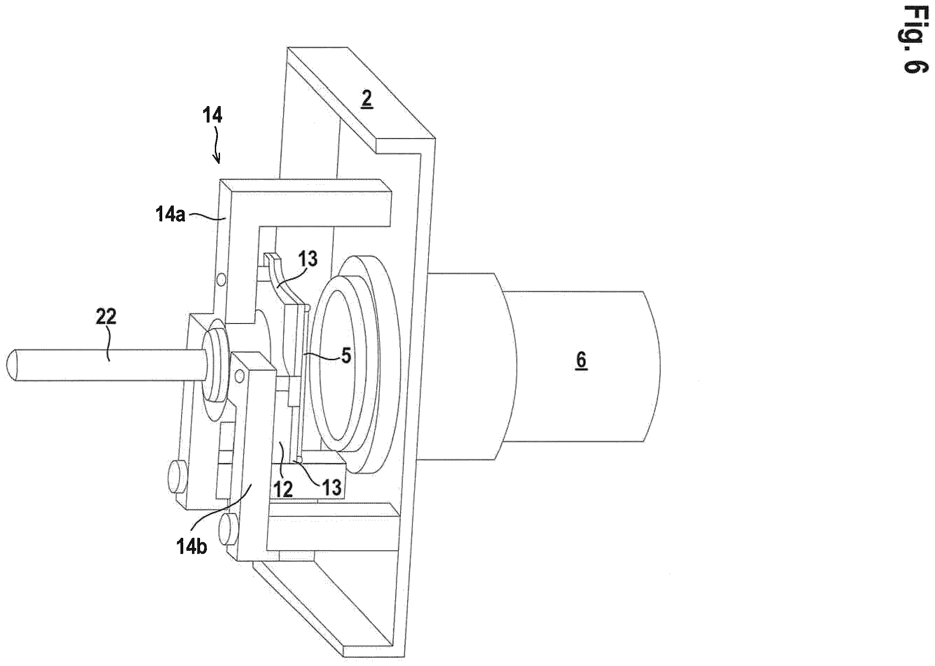

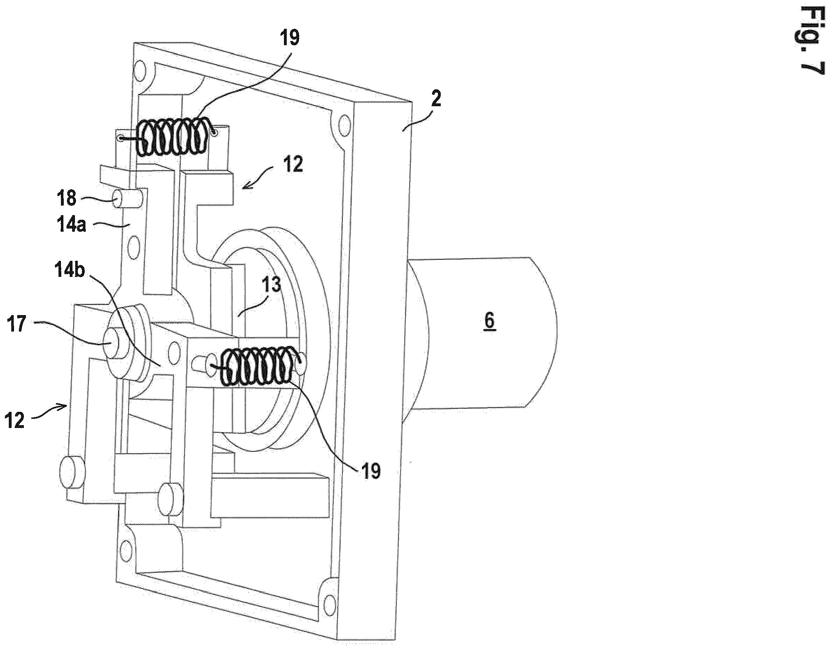

Die Figuren 6 und 7 zeigen Varianten der Ausführungsform der Figuren 2 bis 5.

Auch bei der Ausführungsform der Figuren 6 und 7 ist ein Halteteil 12, das die Leiterplatte 13 mit dem Bildsensor 5 trägt, vorgesehen, wobei das Halteteil 12 wieder ein kugelsegmentförmiges Lagerungssegment 15 aufweist. Weiterhin ist wieder ein stationäres Aufnahmeteil 14 mit einem Aufnahmesegment 16 vorgesehen, wobei das Aufnahmesegment 16 mit dem Lagerungssegment 15 eine Schwenklagerung ausbildet.

Im vorliegenden Fall sind die Einstellschrauben 18 und die Federn 19 räumlich voneinander getrennt (Figur 7).

Bei der Ausführungsform der Figur 6 ist ein stangenförmiges Betätigungselement 22 zum Verkippen des Bildsensors 5 vorgesehen. Im vorliegenden Fall kann das Betätigungselement 22 lösbar im Bereich der Fixierschraube 17 befestigt werden. Alternativ kann ein Betätigungselement 22 vorgesehen sein, das einen festen, unlösbaren Bestandteil der Verstelleinheit 11 bildet.

### Bezugszeichenliste

- (1): Optischer Sensor
- (2): Gehäuse
- (2a): Strebe
- (3): Objekt
- (4): Beleuchtungseinheit
- (5): Bildsensor
- (6): Empfangsoptik
- (7): Sendelichtstrahlen
- (8): Empfangslichtstrahlen
- (9): Steuer- und Auswerteeinheit
- (10): Schnittstelle
- (11): Verstelleinheit
- (12): Halteteil
- (12a, b): Verstrebung
- (13): Leiterplatte
- (14): Aufnahmeteil
- (14a, b): Verstrebung
- (15): Lagerungssegment
- (16): Aufnahmesegment
- (16a): Schrägfläche
- (17): Fixierschraube
- (17a): Führungsscheibe
- (17b): federndes Element
- (18): Einstellschraube
- (19): Feder
- (20): Führungssegment
- (21): Führungsteil
- (22): Betätigungselement

## Patentansprüche

1. Optischer Sensor (1) zur Detektion von Objekten (3) innerhalb eines Erfassungsbereichs, mit einem Empfangslichtstrahlen (8) empfangenden Bildsensor (5), welchem eine Empfangsoptik (6) vorgeordnet ist, wobei in einer Auswerteeinheit in Abhängigkeit von Empfangssignalen des Bildsensors (5) ein Objektfeststellungssignal generiert wird, **dadurch gekennzeichnet, dass** eine Verstelleinheit (11) vorgesehen ist, mittels derer eine Verkippungseinstellung des Bildsensor (5) relativ zu einer Ebene der feststehenden Empfangsoptik (6) durchführbar ist, wobei die Verstelleinheit (11) eine Schwenklagerung aufweist, an welcher das Zentrum des Bildsensors (5) gelagert ist, so dass dieser in zwei Raumrichtungen bezüglich der Ebene der Empfangsoptik (6) kippbar ist, und wobei die Verstelleinheit (11) zwei Einstellmittel aufweist, mittels derer für jeweils eine Raumrichtung ein Kippwinkel des Bildsensors (5) vorgebbar ist.

2. Optischer Sensor (1) nach Anspruch 1, **dadurch gekennzeichnet, dass** die Verstelleinheit (11) ein Halteteil (12), an welchem der Bildsensor (5) befestigt ist, und ein diesem zugeordnetes, stationäres Aufnahmeteil (14) aufweist, wobei zur Ausbildung der Schwenklagerung das Halteteil (12) ein Lagerungssegment (15) aufweist, dessen Zentrum mit dem Zentrum des Bildsensors (5) zusammenfällt und das in einem komplementär zu diesem ausgebildeten Aufnahmesegment (16) des Aufnahmeteils (14) geführt ist, so dass der Bildsensor (5) in zwei Raumrichtungen bezüglich der Ebene der Empfangsoptik (6) kippbar ist.

3. Optischer Sensor (1) nach einem der Ansprüche 1 oder 2, **dadurch gekennzeichnet, dass** Einstellungen der Kippwinkel des Bildsensors (5) mittels eines Fixierelements fixierbar sind.

4. Optischer Sensor (1) nach einem der Ansprüche 2 oder 3, **dadurch gekennzeichnet, dass** das Lagerungssegment (15) eine konvexe Außenkontur aufweist, und dass das Aufnahmesegment (16) eine hierzu komplemente konkave Außenkontur aufweist.

5. Optischer Sensor (1) nach Anspruch 4, **dadurch gekennzeichnet, dass** die Außenkontur des Lagerungssegments (15) von einem Segment einer Kugeloberfläche gebildet ist.

6. Optischer Sensor (1) nach einem der Ansprüche 4 oder 5, **dadurch gekennzeichnet, dass** die Außenkontur des Aufnahmesegments (16) eine drehsymmetrische Anordnung von Schrägflächen (16a) aufweist.

7. Optischer Sensor (1) nach einem der Ansprüche 3 bis 6, **dadurch gekennzeichnet, dass** das Fixierelement von einer das Lagerungssegment (15) und Aufnahmesegment (16) axial durchsetzenden Fixierschraube (17) gebildet ist.

8. Optischer Sensor (1) nach Anspruch 7, **dadurch gekennzeichnet, dass** zwischen dem Kopf der Fixierschraube (17) und dem Aufnahmesegment (16) des Aufnahmeteils (14) eine Führungsscheibe (17a) gelagert ist.

9. Optischer Sensor (1) nach Anspruch 8, **dadurch gekennzeichnet, dass** die Führungsscheibe (17a) mittels eines federnden Elements (17b) federnd gelagert ist.

10. Optischer Sensor (1) nach einem der Ansprüche 1 bis 9, **dadurch gekennzeichnet, dass** die beiden Einstellmittel in zwei unabhängigen Raumrichtungen relativ zu der Schwenklagerung orientiert sind.

11. Optischer Sensor (1) nach einem der Ansprüche 1 bis 10, **dadurch gekennzeichnet, dass** die Einstellmittel von federnd gelagerten Einstellschrauben (18) gebildet sind.

12. Optischer Sensor (1) nach Anspruch 11, **dadurch gekennzeichnet, dass** jede Einstellschraube (18) eine Bohrung im Aufnahmeteil (14) durchsetzt und mit ihrem freien Ende in einer Gewindebohrung des Halteteils (12) gelagert ist.

13. Optischer Sensor (1) nach einem der Ansprüche 1 bis 12, **dadurch gekennzeichnet, dass** eine Zwangsführung vorgesehen ist, mittels derer der Bildsensor (5) gegen Drehbewegungen gesichert ist.

14. Optischer Sensor (1) nach Anspruch 13, **dadurch gekennzeichnet, dass** die Zwangsführung am Halteteil (12) befestigte Führungselemente mit jeweils einer Ausnehmung und in die Ausnehmung greifende bolzenförmige Führungsteile (21), die mit dem Aufnahmeteil (14) verbunden sind, aufweist.

15. Optischer Sensor (1) nach Anspruch 11, **dadurch gekennzeichnet, dass** die Einstellschrauben (18) in Gewinden im Aufnahmeteil (14) geführt sind und gegen Gegenflächen am Halteteil (12) drücken.

16. Optischer Sensor (1) nach Anspruch 15, **dadurch gekennzeichnet, dass** die Gegenflächen von v-förmigen Nuten gebildet sind.

17. Optischer Sensor (1) nach einem der Ansprüche 1 bis 16, **dadurch gekennzeichnet, dass** zur Durchführung von Kippbewegungen des Bildsensors (5) ein Betätigungselement (22) vorgesehen ist.

18. Optischer Sensor (1) nach Anspruch 17, **dadurch gekennzeichnet, dass** das Betätigungselement (22) mit dem Fixierelement verbunden ist oder an diesem anbringbar ist.

19. Optischer Sensor (1) nach einem der Ansprüche 1 bis 18, **dadurch gekennzeichnet, dass** eine Einstellung des Bildsensors (5) durch Klebeverbindungen gesichert werden kann.

20. Optischer Sensor (1) nach einem der Ansprüche 1 bis 19, **dadurch gekennzeichnet, dass** der Bildsensor (5) eine in einer Bildsensorebene liegende Anordnung von Empfangselementen aufweist, und dass mit der Verstelleinheit (11) die Bildsensorebene relativ zur Ebene der Empfangsoptik (6) ausrichtbar ist.

21. Optischer Sensor (1) nach einem der Ansprüche 1 bis 20, **dadurch gekennzeichnet, dass** der Bildsensor (5) in Form eines CMOS-Arrays oder CCD-Arrays und die Empfangsoptik (6) in Form eines Objektivs ausgebildet ist.

22. Optischer Sensor (1) nach einem der Ansprüche 1 bis 21, **dadurch gekennzeichnet, dass** dieser eine Sendelichtstrahlen (7) emittierende Beleuchtungseinheit (4) aufweist, wobei von der Beleuchtungseinheit (4) emittierte Sendelichtstrahlen (7) von einem zu detektierenden Objekt (3) als Empfangslichtstrahlen (8) zum Bildsensor (5) geführt sind.

23. Optischer Sensor (1) nach einem der Ansprüche 1 bis 22, **dadurch gekennzeichnet, dass** die Verstelleinheit (11) mit einer Fokusverstellung kombinierbar ist.

24. Optischer Sensor (1) nach einem der Ansprüche 1 bis 23, **dadurch gekennzeichnet, dass** dieser als Codeleser ausgebildet ist.

## Claims

1. An optical sensor (1) for detecting objects (3) within a detection range, having an image sensor (5) which receives received light beams (8) and upstream of which a receiving optical system (6) is arranged, an object detection signal being generated in an evaluation unit as a function of received signals from the image sensor (5), **characterised in that** an adjustment unit (11) is provided, by means of which a tilting adjustment of the image sensor (5) relative to a plane of the fixed receiving optics (6) can be carried out, the adjustment unit (11) having a pivot bearing on which the centre of the image sensor (5) is mounted, so that the latter can be tilted in two spatial directions with respect to the plane of the receiving optics (6), and the adjustment unit (11) having two setting means by means of which a tilt angle of the image sensor (5) can be preset for in each case one spatial direction.

2. An optical sensor (1) according to claim 1, **characterised in that** the adjustment unit (11) has a holding part (12), to which the image sensor (5) is fixed, and a stationary receiving part (14) associated therewith, the holding part (12) having a bearing segment (15) for forming the pivot bearing, the centre of which coincides with the centre of the image sensor (5) and which is guided in a receiving segment (16) of the receiving part (14) formed complementarily thereto, so that the image sensor (5) can be tilted in two spatial directions with respect to the plane of the receiving optics (6).

3. An optical sensor (1) according to one of the claims 1 or 2, **characterised in that** settings of the tilt angle of the image sensor (5) are fixable by means of a fixing element.

4. An optical sensor (1) according to one of claims 2 or 3, **characterised in that** the bearing segment (15) has a convex outer contour, and **in that** the receiving segment (16) has a concave outer contour complementary thereto.

5. An optical sensor (1) according to claim 4, **characterised in that** the outer contour of the bearing segment (15) is formed by a segment of a spherical surface.

6. An optical sensor (1) according to one of claims 4 or 5, **characterised in that** the outer contour of the mounting segment (16) has a rotationally symmetrical arrangement of oblique surfaces (16a).

7. An optical sensor (1) according to any one of claims 3 to 6, **characterised in that** the fixing element is formed by a fixing screw (17) passing axially through the bearing segment (15) and receiving segment (16).

8. An optical sensor (1) according to claim 7, **characterised in that** a guide disc (17a) is mounted between the head of the fixing screw (17) and the receiving segment (16) of the receiving part (14).

9. An optical sensor (1) according to claim 8, **characterised in that** the guide disc (17a) is resiliently mounted by means of a resilient element (17b).

10. An optical sensor (1) according to one of the claims 1 to 9, **characterised in that** the two adjusting means are oriented in two independent spatial directions relative to the pivot bearing.

11. An optical sensor (1) according to one of the claims 1 to 10, **characterised in that** the adjustment means are formed by spring-mounted adjustment screws (18).

12. An optical sensor (1) according to claim 11, **characterised in that** each adjusting screw (18) passes through a bore in the receiving part (14) and is mounted with its free end in a threaded bore of the holding part (12).

13. An optical sensor (1) according to one of claims 1 to 12, **characterised in that** a constraining guide is provided by means of which the image sensor (5) is secured against rotary movements.

14. An optical sensor (1) according to claim 13, **characterised in that** the positive guide has guide elements which are fastened to the holding part (12) and each have a recess, and bolt-shaped guide parts (21) which engage in the recess and are connected to the receiving part (14).

15. An optical sensor (1) according to claim 11, **characterised in that** the adjusting screws (18) are guided in threads in the receiving part (14) and press against mating surfaces on the holding part (12).

16. An optical sensor (1) according to claim 15, **characterised in that** the mating surfaces are formed by V-shaped grooves.

17. An optical sensor (1) according to one of the claims 1 to 16, **characterised in that** an actuating element (22) is provided for carrying out tilting movements of the image sensor (5).

18. An optical sensor (1) according to claim 17, **characterised in that** the actuating element (22) is connected to the fixing element or can be attached thereto.

19. An optical sensor (1) according to any one of claims 1 to 18, **characterised in that** an adjustment of the image sensor (5) can be secured by adhesive connections.

20. An optical sensor (1) according to one of claims 1 to 19, **characterised in that** the image sensor (5) has an arrangement of receiving elements lying in an image sensor plane, and **in that** the image sensor plane can be aligned relative to the plane of the receiving optics (6) by means of the adjustment unit (11).

21. An optical sensor (1) according to one of claims 1 to 20, **characterised in that** the image sensor (5) is in the form of a CMOS array or CCD array and the receiving optics (6) is in the form of a lens.

22. An optical sensor (1) according to one of the claims 1 to 21, **characterised in that** it has an illumination unit (4) emitting transmitted light beams (7), transmitted light beams (7) emitted by the illumination unit (4) being guided from an object (3) to be detected as received light beams (8) to the image sensor (5).

23. An optical sensor (1) according to one of claims 1 to 22, **characterised in that** the adjustment unit (11) can be combined with a focus adjustment.

24. An optical sensor (1) according to one of claims 1 to 23, **characterised in that** it is designed as a code reader.

## Revendications

1. Capteur optique (1) pour la détection d'objets (3) dans une plage de détection, comportant un capteur d'image (5) qui reçoit des faisceaux lumineux reçus (8) et en amont duquel est disposé un système optique de réception (6), un signal de détection d'objet étant généré dans une unité d'évaluation en fonction des signaux reçus du capteur d'image (5), **caractérisé en ce qu'**une unité de réglage (11) est prévue, permettant d'effectuer un réglage de l'inclinaison du capteur d'images (5) par rapport à un plan de l'optique de réception fixe (6), l'unité de réglage (11) comportant un palier pivotant sur lequel le centre du capteur d'images (5) est monté, de sorte que ce dernier peut être incliné dans deux directions spatiales par rapport au plan de l'optique de réception (6), et l'unité de réglage (11) comportant deux moyens de réglage permettant de prérégler un angle d'inclinaison du capteur d'images (5) pour chacune des directions spatiales.

2. Capteur optique (1) selon la revendication 1, **caractérisé en ce que** l'unité de réglage (11) a une partie de maintien (12), à laquelle le capteur d'image (5) est fixé, et une partie de réception stationnaire (14) associée, la partie de maintien (12) ayant un segment de roulement (15) pour former le palier de pivotement, dont le centre coïncide avec le centre du capteur d'images (5) et qui est guidé dans un segment de réception (16) de la partie réceptrice (14) formée complémentairement, de sorte que le capteur d'images (5) peut être incliné dans deux directions spatiales par rapport au plan de l'optique réceptrice (6).

3. Capteur optique (1) selon l'une des revendications 1 ou 2, **caractérisé par le fait que** les réglages de l'angle d'inclinaison du capteur d'image (5) peuvent être fixés au moyen d'un élément de fixation.

4. Capteur optique (1) selon l'une des revendications 2 ou 3, **caractérisé en ce que** le segment porteur (15) a un contour extérieur convexe et **en ce que** le segment récepteur (16) a un contour extérieur concave qui lui est complémentaire.

5. Capteur optique (1) selon la revendication 4, **caractérisé en ce que** le contour extérieur du segment porteur (15) est formé par un segment de surface sphérique.

6. Capteur optique (1) selon l'une des revendications 4 ou 5, **caractérisé en ce que** le contour extérieur du segment de montage (16) présente un arrangement de surfaces obliques (16a) à symétrie de rotation.

7. Capteur optique (1) selon l'une des revendications 3 à 6, **caractérisé en ce que** l'élément de fixation est formé par une vis de fixation (17) traversant axialement le segment porteur (15) et le segment récepteur (16).

8. Capteur optique (1) selon la revendication 7, **caractérisé en ce qu'**un disque de guidage (17a) est monté entre la tête de la vis de fixation (17) et le segment récepteur (16) de la partie réceptrice (14).

9. Capteur optique (1) selon la revendication 8, **caractérisé en ce que** le disque de guidage (17a) est monté élastiquement au moyen d'un élément élastique (17b).

10. Capteur optique (1) selon l'une des revendications 1 à 9, **caractérisé en ce que** les deux moyens de réglage sont orientés dans deux directions spatiales indépendantes par rapport au palier de pivotement.

11. Capteur optique (1) selon l'une des revendications 1 à 10, **caractérisé en ce que** les moyens de réglage sont constitués par des vis de réglage (18) montées sur ressort.

12. Capteur optique (1) selon la revendication 11, **caractérisé en ce que** chaque vis de réglage (18) traverse un alésage de la partie réceptrice (14) et est montée avec son extrémité libre dans un alésage fileté de la partie de maintien (12).

13. Capteur optique (1) selon l'une des revendications 1 à 12, **caractérisé en ce qu'**un guide de contrainte est fourni au moyen duquel le capteur d'image (5) est protégé contre les mouvements de rotation.

14. Capteur optique (1) selon la revendication 13, **caractérisé en ce que** le guide positif comporte des éléments de guidage qui sont fixés à la partie de maintien (12) et qui présentent chacun un renfoncement, et des pièces de guidage en forme de boulon (21) qui s'engagent dans le renfoncement et sont reliées à la partie de réception (14).

15. Capteur optique (1) selon la revendication 11, **caractérisé en ce que** les vis de réglage (18) sont guidées dans les filets de la partie réceptrice (14) et s'appuient sur les surfaces correspondantes de la partie de maintien (12).

16. Capteur optique (1) selon la revendication 15, **caractérisé en ce que** les surfaces de contact sont formées par des rainures en forme de V.

17. Capteur optique (1) selon l'une des revendications 1 à 16, **caractérisé en ce qu'**un élément d'actionnement (22) est prévu pour effectuer des mouvements de basculement du capteur d'image (5).

18. Capteur optique (1) selon la revendication 17, **caractérisé en ce que** l'élément d'actionnement (22) est relié à l'élément de fixation ou peut y être fixé.

19. Capteur optique (1) selon l'une quelconque des revendications 1 à 18, **caractérisé en ce qu'**un réglage du capteur d'image (5) peut être assuré par des connexions adhésives.

20. Capteur optique (1) selon l'une des revendications 1 à 19, **caractérisé en ce que** le capteur d'image (5) a un arrangement d'éléments de réception situés dans un plan de capteur d'image, et **en ce que** le plan de capteur d'image peut être aligné par rapport au plan de l'optique de réception (6) au moyen de l'unité de réglage (11).

21. Capteur optique (1) selon l'une des revendications 1 à 20, **caractérisé par le fait que** le capteur d'image (5) se présente sous la forme d'une matrice CMOS ou CCD et que l'optique de réception (6) se présente sous la forme d'une lentille.

22. Capteur optique (1) selon l'une des revendications 1 à 21, **caractérisé en ce qu'**il comporte une unité d'éclairage (4) émettant des faisceaux de lumière transmis (7), les faisceaux de lumière transmis (7) émis par l'unité d'éclairage (4) étant guidés depuis un objet (3) à détecter en tant que faisceaux de lumière reçus (8) vers le capteur d'image (5).

23. Capteur optique (1) selon l'une des revendications 1 à 22, **caractérisé par le fait que** l'unité de réglage (11) peut être combinée avec un réglage de la mise au point.

24. Capteur optique (1) selon l'une des revendications 1 à 23, **caractérisé en ce qu'**il est conçu comme un lecteur de code.
